# EUROPEAN PATENT APPLICATION

(11) **EP 1 881 056 A1**
(43) Date of publication of application: **23.01.2008**
(21) Application number: 06746024.6
(22) Date of filing: 02.05.2006
(51) Int. Cl.: C10L 3/12, B01J 20/02, B01J 20/18, C10L 3/10, H01M 8/06

(54) **LIQUEFIED PETROLEUM GAS FOR LP GAS FUEL CELL, METHOD OF DESULFURIZING THE SAME AND FUEL CELL SYSTEM**

(30) Priority: 12.05.2005 JP 2005139339
(71) Applicant: IDEMITSU KOSAN CO., LTD., Tokyo 100-8321 (JP)
(72) Inventor: TAKEGOSHI, Gakuji, 2990293 (JP); KATSUNO, Hisashi, 2990293 (JP)
(74) Representative: HOFFMANN EITLE
(86) International application number: PCT/JP2006/309174
(87) International publication number: WO 2006/120981

(57) **Abstract**

The invention provides a liquefied petroleum gas fuel for LP gas fuel cells for being fed to a fuel cell system through spontaneous vaporization, which fuel has a C2 hydrocarbon compound content of 3 vol.% or less, a C4 hydrocarbon compound content of 3 vol.% or less, a total sulfur content of 10 ppm by mass or less, a carbonyl sulfide content in terms of sulfur content of 2 ppm by mass or less, a methyl mercaptan content in terms of sulfur content of 3 ppm by mass or less, a content of sulfur compounds having a boiling point equal to or higher than that of dimethyl disulfide in terms of sulfur content of 2 ppm by mass or less, a methanol content of 50 ppm by mass or less, and a water content of 50 ppm by mass or less, the balance being a C3 hydrocarbon compounds. The liquefied petroleum gas fuel for LP gas fuel cells ensures effective performance of a desulfurizing agent even when used in a minimum amount, thereby enhancing desulfurization performance, prevents damaging of a reforming catalyst employed in a reformer for producing hydrogen provided on the downstream side of a desulfurizer, and realizes reliable operation of the reformer and consistent generation of electric power. The invention also provides a method for desulfurizing the liquefied petroleum gas fuel, and a fuel cell system employing a hydrogen-containing gas produced through reforming of the liquefied petroleum gas fuel which has been desulfurized through the desulfurization method.

## Description

### Technical Field

The present invention relates to a liquefied petroleum gas fuel which is suitable for LP gas fuel cell systems and which is fed to such fuel cell systems through a spontaneous vaporization supply method; to a desulfurization method for the liquefied petroleum gas fuel; and to a fuel cell system employing a hydrogen-containing gas which has been produced through reforming of the desulfurized liquefied petroleum gas fuel.

### Background Art

In recent years, in order to cope with mounting global environmental crisis in the future, there has been keen demand for the development of new energy-supply systems friendly to the earth. Among them, energy-supply systems employing hydrogen as a fuel, such as fuel cells and hydrogen engines, have attracted attention, from the viewpoint of high energy efficiency and non-contaminating exhaust gas. For supplying hydrogen to, among others, a fuel cell, there have already been known a direct hydrogen supply technique including compressing or liquefying hydrogen, and a fuel supply technique including feeding an oxygen-containing fuel such as methanol or a reformed hydrocarbon fuel such as naphtha (see, for example, Non-Patent Document 1). Of these techniques, direct hydrogen supply is advantageous, in that hydrogen can be utilized as a fuel without any further treatment. However, since hydrogen is in the gas form at ambient temperature, care must be taken for storage and loading to vehicles. On the other hand, production of hydrogen through reforming of a hydrocarbon fuel such as liquefied petroleum gas has attracted attention, because existing fuel supply facilities can be employed, and a high overall energy efficiency can be attained.

Patent Document 1 discloses a hydrocarbon compound fuel for fuel cell systems which is in the gas form at ambient temperature and which includes 60 mol% or more saturated component, 40 mol% or less olefin, 0.5 mol% or less butadiene, and 0.1 mol% or more C≥4 isoparaffin (in saturated component).
Generally, liquefied petroleum gas for use as a domestic fuel has a C3 hydrocarbon compound content of 80 vol.% or more, a C2 hydrocarbon compound content of 5 vol.% or less, and a C4 hydrocarbon compound content of 20 vol.% or less. Such a liquefied petroleum gas fuel generally contains sulfur compounds at a level of several ppm by mass to tens of ppm by mass.
These liquefied petroleum gases are supplied to a gas-employing apparatus through a spontaneous vaporization supply method (hereinafter referred to simply "spontaneous vaporization") or a forced vaporization supply method (hereinafter referred to simply as forced vaporization) employing a heat source. In forced vaporization supply, portions of liquefied petroleum gas are successively vaporized to thereby provide a supply gas. Therefore, the hydrocarbon compound composition of the gas in a compressed-gas cylinder is almost equivalent to that of the supplied gas.
In contrast, when spontaneous vaporization supply is employed, the sulfur content of the supplied gas increases with the consumption of liquefied petroleum gas contained in a compressed-gas cylinder. Therefore, difficulty is encountered in performing complete desulfurization. In addition, among hydrocarbon compounds contained in a compressed-gas cylinder, a low-boiling-point hydrocarbon compound is more readily vaporized. Thus, the hydrocarbon compound supplied to a fuel cell system becomes heavier in response to the consumption of the liquefied petroleum gas contained in the compressed-gas cylinder. As a result, use of such gas results in a decrease in amount of generated hydrogen, and the amount of gas fed to a fuel cell must be increased through a certain operation in order to gain required electric power from the fuel cell.
Hitherto, however, there has never been realized means for accurately determining the amount of supplied liquefied petroleum gas in response to the compositional change of the liquefied petroleum gas. Therefore, the amount of fuel to be supplied in order to gain a desired electric power is roughly estimated, and the fuel is supplied in accordance with the estimated value. In an alternative required approach, the gained electric power is fed back to the amount of fuel supply, and the amount of fuel supply is gradually adjusted.

In the case where a sulfur compound in a very small amount is leaked downstream from a desulfurizer, a reforming catalyst employed in a reformer provided on the downstream side of the desulfurizer is damaged, thereby failing to attain continuous supply of a predetermined amount of hydrogen to a fuel cell. Therefore, when a reforming catalyst has been damaged, the reformer is removed from the system and substituted by a new reformer. The replacement of expensive reformer is also disadvantageous from an industrial viewpoint. In other words, it is essential to prevent leakage of even a small amount of a sulfur compound from the desulfurizer. In the production of hydrogen for use in fuel cells, a desulfurizer is placed in a fuel cell system. In this case, if the desulfurizer is additionally heated through a method; e.g., by use of heat discharged from a reformer or by means of an electric heater, the efficiency of the fuel cell system decreases. Thus, the desulfurizing agent desirably exhibits excellent performance at 80°C or lower.
Patent Document 2 discloses a zeolite-based desulfurizing agent, which can effectively remove sulfur compounds from city gas even when the water content of the gas is comparatively high. However, the zeolite-based desulfurizing agent cannot satisfactorily remove carbonyl sulfide from liquefied petroleum gas. Patent Document 3 discloses a metal oxide-based desulfurizing agent which can effectively remove carbonyl sulfide. Patent Document 4 discloses a method for removing a sulfur compound from a gaseous hydrocarbon compound, which method employs a desulfurizer having, in combination, a zeolite-containing desulfurizing agent layer, and a desulfurizing agent layer containing at least one species selected from among a metallic element, a metal oxide, and a metallic component-on-oxide. However, Patent Documents 3 and 4 never disclose the effect, on desulfurization performance, of a liquefied petroleum gas fuel having a total sulfur content, a specific sulfur compound content in terms of sulfur content, a methanol content, and a water content, of the liquefied petroleum gas fuel, each being equal to or less than a specific value.

Non-Patent Document 1: Masaki IKEMATSU, "Engine Technology," published by Sankai-do (Jan 2001), Vol. 3, No. 1, p. 35 Patent Document 1: WO 02/000813 pamphlet
Patent Document 2: Japanese Patent Application Laid-Open (kokai) No. 2001-286753
Patent Document 3: Japanese Patent Application Laid-Open (kokai) No. 2004-130216
Patent Document 4: WO 04/058927 pamphlet

### Disclosure of the Invention

### Problems to be Solved by the Invention

The present invention has been conceived under such circumstances. Thus, an object of the present invention is to provide a liquefied petroleum gas fuel for LP gas fuel cells, which fuel exhibits only a small gas compositional change even when the fuel is fed as a fuel for LP gas fuel cell systems through spontaneous vaporization; which fuel ensures effective performance of a desulfurizing agent even when used in a minimum amount, thereby enhancing desulfurization performance; which fuel prevents damaging of a reforming catalyst employed in a reformer for producing hydrogen provided on the downstream side of a desulfurizer; and which fuel realizes reliable operation of the reformer and consistent generation of electric power. Another object of the invention is to provide a method for desulfurizing the liquefied petroleum gas fuel. Still another object of the invention is to provide a fuel cell system employing a hydrogen-containing gas produced through reforming of the liquefied petroleum gas fuel which has been desulfurized through the desulfurization method.

### Means for Solving the problems

The present inventors have conducted extensive studies in order to attain the aforementioned objects, and have found that the aforementioned objects can be attained by a liquefied petroleum gas fuel having a specific hydrocarbon compound composition and having a total sulfur content, a specific sulfur compound content in terms of a sulfur content, a methanol content, and a water content of the liquefied petroleum gas fuel, each being equal to or less than a respective specific value. The present invention has been accomplished on the basis of this finding.
Accordingly, the present invention is directed to the following.
(1) A liquefied petroleum gas fuel for LP gas fuel cells for being fed to a fuel cell system through spontaneous vaporization, which fuel has a C2 hydrocarbon compound content of 3 vol.% or less, a C4 hydrocarbon compound content of 3 vol.% or less, a total sulfur content of 10 ppm by mass or less, a carbonyl sulfide content in terms of sulfur content of 2 ppm by mass or less, a methyl mercaptan content in terms of sulfur content of 3 ppm by mass or less, a content of sulfur compounds having a boiling point equal to or higher than that of dimethyl disulfide in terms of sulfur content of 2 ppm by mass or less, a methanol content of 50 ppm by mass or less, and a water content of 50 ppm by mass or less, the balance being a C3 hydrocarbon compounds.
(2) The liquefied petroleum gas fuel for LP gas fuel cells as described in (1) above, wherein the C2 hydrocarbon compound content is 1 vol.% or less, and the C4 hydrocarbon compound content is 2 vol.% or less, the balance being C3 hydrocarbon compounds.
(3) The liquefied petroleum gas fuel for LP gas fuel cells as described in (1) or (2) above, which has a C3 olefin content of 0.1 vol.% or less, and a C4 olefin and/or diolefin content of 0.1 vol.% or less.
(4) The liquefied petroleum gas fuel for LP gas fuel cells as described in any one of (1) to (3) above, which has a C4 diolefin content of 0.03 vol.% or less.

(5) A desulfurization method characterized by comprising spontaneously vaporizing a liquefied petroleum gas fuel for LP gas fuel cells as recited in any one of (1) to (4) above and desulfurizing by use of a desulfurizing agent.
(6) The desulfurization method as described in (5) above, wherein the desulfurizing agent comprises a zeolite-containing desulfurizing agent and/or at least one species selected from among a metallic element, a metal oxide, and a metallic component-on-oxide.
(7) The desulfurization method as described in (6) above, wherein the zeolite-containing desulfurizing agent comprises zeolite and at least one metallic component selected from among an Ag component, a Cu component, an Ni component, a Zn component, an Mn component, an Fe component, a Co component, an alkali metal component, an alkaline earth metal component, and a rare earth metal component.
(8) The desulfurization method as described in (6) or (7) above, wherein the zeolite has a β (BEA) structure and/or a faujasite (FAU) structure.
(9) The desulfurization method as described in (6) above, wherein the desulfurizing agent comprising at least one species selected from among a metallic element, a metal oxide, and a metallic component-on-oxide, contains at least one metallic component selected from among an Ag component, a Cu component, an Ni component, a Zn component, an Mn component, an Fe component, a Co component, an Si component, an Al component, an alkali metal component, an alkaline earth metal component, and a rare earth metal component.

(10) An LP gas fuel cell system characterized by employing a hydrogen-containing gas produced from a reforming product of a liquefied petroleum gas fuel which has been desulfurized through a desulfurization method as recited in any one of (5) to (9) above.
(11) The LP gas fuel cell system as described in (10) above, wherein reforming is partial-oxidation reforming, auto-thermal reforming, steam reforming, or carbon dioxide reforming.

### Effects of the Invention

According to the present invention, there can be provided a liquefied petroleum gas fuel for LP gas fuel cells, which fuel ensures effective performance of a desulfurizing agent even when used in a minimum amount, thereby enhancing desulfurization performance; which fuel prevents damaging of a reforming catalyst employed in a reformer for producing hydrogen provided on the downstream side of a desulfurizer; and which fuel realizes reliable operation of the reformer and consistent generation of electric power, a method for desulfurizing the liquefied petroleum gas fuel, and a fuel cell system employing a hydrogen-containing gas produced through reforming of the liquefied petroleum gas fuel which has been desulfurized through the desulfurization method.

### Brief Description of the Drawings

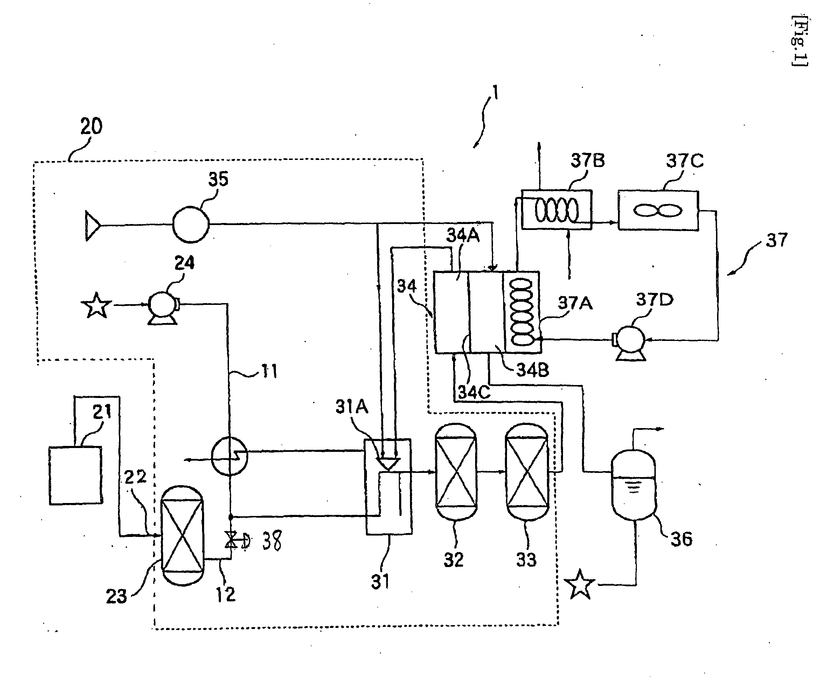

Fig. 1 shows a schematic diagram of an exemplary fuel cell system according to the present invention.

### Description of Reference Numerals

1: Fuel cell system
11: Water feed pipe
12: Fuel conduit
20: Hydrogen production system
21: Compressed-gas cylinder for liquefied petroleum gas
22: Fuel feed line
23: Desulfurizer
24: Water pump
31: Reformer
31A: Burner of reformer
32: CO converter
33: CO-selective oxidation apparatus
34: Fuel cell
34A: Fuel cell negative electrode
34B: Fuel cell positive electrode
34C: Fuel cell polymer electrolyte
35: Air blower
36: Liquid/gas separator
37: Exhausted heat recovering apparatus
37A: Heat-exchanger
37B: Heat-exchanger
37C: Cooler
37D: Cooling medium recirculation pump
38: Flow rate control valve

### Best Modes for Carrying Out the Invention

The present invention will next be described in more detail.
The liquefied petroleum gas employed as a fuel in the present invention is a liquefied petroleum gas fuel for LP gas fuel cells for being fed to a fuel cell system through spontaneous vaporization, which fuel has a C2 hydrocarbon compound content of 3 vol.% or less, a C4 hydrocarbon compound content of 3 vol.% or less, a total sulfur content of 10 ppm by mass or less, a carbonyl sulfide content in terms of sulfur content of 2 ppm by mass or less, a methyl mercaptan content in terms of sulfur content of 3 ppm by mass or less, a content of sulfur compounds having a boiling point equal to or higher than that of dimethyl disulfide of 2 ppm by mass or less, a methanol content of 50 ppm by mass or less, and a water content of 50 ppm by mass or less, the balance being a C3 hydrocarbon compounds.

The C3 hydrocarbon compound is a C3 paraffin and/or olefin. The C2 hydrocarbon compound is a C2 paraffin and/or olefin. The C4 hydrocarbon compound is at least one hydrocarbon compound selected from among C4 paraffins, olefins, and diolefins.
Generally, the C3 hydrocarbon compound content is preferably 96 vol.% or more. When the content is less than 96 vol.%, in the case where such a liquefied petroleum gas is employed as a hydrogen source for fuel cells and supplied through vaporization, the hydrocarbon compound composition of the supplied gas may considerably vary, making gas flow control difficult. In the case where steam is added during reforming, the steam/carbon ratio may vary, failing to attain reliable operation of a reformer.
When the C4 hydrocarbon compound content is in excess of 3 vol.%, in the case where such a liquefied petroleum gas is employed as a hydrogen source for fuel cells and supplied through vaporization, the C4 hydrocarbon compound composition increases at the end of use of a single batch (compressed-gas cylinder) of liquefied petroleum gas, and hydrogen may fail to be produced in an amount sufficient for gaining predetermined electric power by a reformer.
The aforementioned composition of each component having a specific number of carbon atoms is determined in accordance with the analysis method stipulated in JIS K 2240 "Liquefied petroleum gas, 5.9 Compositional analysis."

The liquefied petroleum gas fuel of the present invention has a total sulfur content of 10 ppm by mass or less, preferably 7 ppm by mass or less, more preferably 5 ppm by mass or less. The carbonyl sulfide content in terms of sulfur content is 2 ppm by mass or less, preferably 1 ppm by mass or less. The methyl mercaptan content in terms of sulfur content is 3 ppm by mass or less, preferably 2 ppm by mass or less. The content of sulfur compounds having a boiling point equal to or higher than that of dimethyl disulfide in terms of sulfur content is 2 ppm by mass or less, preferably 1 ppm by mass or less. When the total sulfur content is in excess of 10 ppm by mass, or when any of the carbonyl sulfide content, the methyl mercaptan content, and the content of sulfur compounds having a boiling point equal to or higher than that of dimethyl disulfide, in terms of sulfur content, is in excess of the aforementioned respective upper limit, a desulfurizing agent is considerably affected, thereby increasing the amount of desulfurizing agent employed, limiting the dimensions of the fuel cell system, and making the fuel cell system economically disadvantageous.
Examples of the sulfur compounds having a boiling point equal to or higher than that of dimethyl disulfide (b.p.: 110°C), which compounds are generally contained in liquefied petroleum gas fuels, include methyl ethyl disulfide, diethyl sulfide, methyl propyl disulfide, and thiophene.
Each sulfur compound content is determined through gas chromatography by means of a sulfur chemiluminescence detector (SCD). The determination may be performed under, for example, the following conditions: separation column: DB-1; path: 60 m; membrane thickness: 5 µm; ID: 0.32 mm; split ratio: 1:5; carrier gas: helium; flow rate: 23 mL/min; and temperature profile:40°C for 4 min, to 200°C at 10°C/min, and 200°C for 15 min.

The methanol content of the liquefied petroleum gas fuel of the present invention is 50 ppm by mass or less, preferably 30 ppm by mass or less. When the methanol content is in excess of 50 ppm by mass, a desulfurizing agent is considerably affected, thereby increasing the amount of desulfurizing agent employed, limiting the dimensions of the fuel cell system, and making the fuel cell system economically disadvantageous.
The methanol content is determined in accordance with a standard of Japan LP Gas Association, JLPGA-S-06T.

The water content of the liquefied petroleum gas fuel of the present invention is 50 ppm by mass or less, preferably 10 ppm by mass to 30 ppm by mass. When the water content is in excess of 50 ppm by mass, a desulfurizing agent is considerably affected, thereby increasing the amount of desulfurizing agent employed, limiting the dimensions of the fuel cell system, and making the fuel cell system economically disadvantageous.
The water content is determined in accordance with a standard of Japan LP Gas Association, JLPGA-S-03.

No particular limitation is imposed on the type of fuel cells in which the liquefied petroleum gas fuel of the present invention is employed, and the liquefied petroleum gas fuel may be employed in any fuel cells including a solid oxide electrolyte fuel cell (SOFC), a polymer electrolyte fuel cell (PEFC), a phosphoric acid fuel cell (PAFC), and a molten carbonate fuel cell (MCFC).

No particular limitation is imposed on the method of producing the liquefied petroleum gas fuel. For example, there is employed a production method including purifying gas components by-produced from an oil field or a natural gas field and compressing the purified product, or a production method including collecting LPG fuel in a crude oil purification step. Specifically, during the purification of crude oil, a liquefied petroleum gas component produced by a crude oil ambient-pressure distillation apparatus, or a liquefied petroleum gas component produced by a naphtha catalytic reformer or a catalytic cracking apparatus is separated through distillation, followed by removing sulfur components and further separation through distillation, whereby a liquefied petroleum gas fuel of desired purity can be produced at a primary terminal. Removal of sulfur components is preformed through an appropriate method selected from among hydro-desulfurization, soda-washing, amine-washing, and the Merox process.
A liquefied petroleum gas fuel containing propane and butane as predominant components is separated in a propane-removing distillation tower. In order to elevate the propane content, the reflux ratio at the top of a distillation tower is increased, or tower top temperature is lowered during distillation.
When sulfur components are removed through hydro-desulfurization, the total sulfur component content can be reduced by elevating reaction temperature.
When a sulfur component, methyl mercaptan, is removed through soda-washing, the ratio of the amount of liquefied petroleum gas to be treated to that of circulated sodium species is appropriately adjusted. When the ratio is excessively high, the sulfur compound is backwardly extracted to the liquefied petroleum gas fuel, failing to attain an intended sulfur content.
The content of sulfur compounds having a boiling point equal to or higher than that of dimethyl disulfide can be adjusted to an intended sulfur content through enhanced separation of dimethyl disulfide from the liquefied petroleum gas fuel by means of a settler of a Merox unit.
Among sulfur compounds, carbonyl sulfide is contained predominantly in a liquefied petroleum gas produced by means of a fluid catalytic cracking apparatus. Therefore, use of the thus-produced liquefied petroleum gas is absolutely avoided for producing a final product. If required, carbonyl sulfide is removed from the liquefied petroleum gas in the production state by means of a desulfurization tower holding a metallic desulfurizing agent.
The water content is adjusted by controlling (increasing or decreasing) the reflux ratio in a propane-removing tower or causing the liquefied petroleum gas to pass through a dehydration tower.

Generally, liquefied petroleum gas employed as a fuel for fuel cells contains a tiny amount of sulfur components which have not been removed through the aforementioned crude oil purification step and a sulfur component added thereto as an odorant, for example, a sulfur compound such as a mercaptan (e.g., methyl mercaptan), carbonyl sulfide, hydrogen sulfide, a sulfide, a disulfide, thiophene, or a hydrothiophene. When a liquefied petroleum gas fuel is reformed to produce hydrogen for fuel cells, these sulfur compound must be decreased to as small an amount as possible in order to prevent the aforementioned poisoning of the catalyst. Therefore, the liquefied petroleum gas fuel of the present invention is desulfurized by use of a conventionally known desulfurizing agent. In order to fully attain the performance of the desulfurizing agent employed, a liquefied petroleum gas fuel having as low a sulfur content as possible is preferably employed. Therefore, the content of carbonyl sulfide which is more difficult to desulfurize as compared with other sulfur compounds is preferably as small as possible. So long as the content is small, a residue does not greatly affect the desulfurizing agent. The residue content is 20 ppm by mass or less, preferably 10 ppm by mass or less, more preferably 5 ppm by mass or less.

According to the desulfurizing method of the present invention, the aforementioned liquefied petroleum gas fuel is desulfurized by use of a desulfurizing agent.
The desulfurizing agent preferably comprises a zeolite-containing desulfurizing agent and/or at least one species selected from among a metallic element, a metal oxide, and a metallic component-on-oxide.
No particular limitation is imposed on the species of the zeolite-containing desulfurizing agent (hereinafter also referred to as desulfurizing agent A), and any known zeolite-containing desulfurizing agents may be employed. Examples of the desulfurizing agent A include metal-on zeolite carrier type agents; specifically, at least one metallic component selected from among an Ag component, a Cu component, and an Ni component, a Zn component, an Mn component, an Fe component, a Co component, an alkali metal component, an alkaline earth metal component, and a rare earth metal component is carried on a zeolite carrier which is one or more zeolite species of β-type, X-type, Y-type, etc. The zeolite particularly preferably has a β (BEA) structure and/or a faujasite (FAU) structure. Examples of preferred alkali metal components include potassium and sodium. Examples of preferred alkaline earth metal components include calcium and magnesium. Examples of preferred rare earth metal components include lanthanum and cerium. Among these metallic components, Ag components and/or Cu components are particularly preferred.

The desulfurizing agent A may be prepared by causing the aforementioned metallic component(s) to be supported on the aforementioned zeolite. Specifically, an aqueous solution containing a water soluble compound of a metallic component of interest is brought into contact with zeolite through stirring, impregnation, flowing, or the like, and appropriately, washing with water, followed by drying and calcining.
The thus-prepared desulfurizing agent A has a metallic component content in terms of metal element is generally 1 to 40 mass%, preferably 5 to 30 mass%.

Examples of the desulfurizing agent comprising at least one species selected from among a metallic element, a metal oxide, and a metallic component-on-oxide (hereinafter also referred to as desulfurizing agent B) include metal-on carrier type agents; specifically, at least one metallic component selected from among an Ag component, a Cu component, an Ni component, a Zn component, an Mn component, an Fe component, a Co component, an Si component, an Al component, an alkali metal component, an alkaline earth metal component, and a rare earth metal component is held on a carrier. Examples of preferred alkali metal components include potassium and sodium. Examples of preferred alkaline earth metal components include calcium and magnesium. Examples of preferred rare earth metal components include lanthanum and cerium.
The desulfurizing agent B is preferably a porous inorganic oxide carrier on which the aforementioned metallic component(s) are caused to be supported. Particularly, at least one species selected from among an Ag component, a Cu component, an Ni component, and a cerium component supported on a carrier is preferred. These metallic components may be supported on a carrier through a conventional method such as co-precipitation or impregnation.

The aforementioned porous inorganic oxide carrier is, for example, at least one species selected from among silica, alumina, silica-alumina, titania, zirconia, magnesia, ceria, diatomaceous earth, terra alba, clay, and zinc oxide. Of these, a silica carrier, an alumina carrier, and a silica-alumina carrier are preferred.
Next, the method of preparing an Ni-Cu-containing desulfurizing agent including a silica-alumina carrier, which is a preferred example of the desulfurizing agent B, will be described.
From the viewpoint of desulfurization performance and mechanical strength, generally, the desulfurizing agent B preferably has a total metal (supported on carrier) content (in terms of oxide) of 5 to 90 mass% and a carrier content of 95 to 10 mass%. When co-precipitation is employed, the total metal (supported on carrier) content (in terms of oxide) is preferably 40 to 90 mass%, more preferably 70 to 90 mass%. When impregnation is employed, the total metal content is preferably 5 to 40 mass%.
In the preparation of the desulfurizing agent B, firstly, an acidic aqueous solution or aqueous dispersion containing a nickel source, a copper source, and an aluminum source, and a basic aqueous solution containing a silicon source and an inorganic base are prepared. Examples of the nickel source employed in the aforementioned acidic aqueous solution or aqueous dispersion include nickel chloride, nickel nitrate, nickel sulfate, nickel acetate, nickel carbonate, and hydrates thereof, and examples of the copper source include copper chloride, copper nitrate, copper sulfate, copper acetate, and hydrates thereof. These nickel sources or copper sources may be used singly or in combination of two or more species.

Examples of the aluminum source include alumina hydrates such as pseudo-boehmite, boehmite-alumina, bayerite, and gibbsite; and γ-alumina. Of these, pseudo-boehmite, boehmite-alumina, and γ-alumina are preferred. These alumina species may be in the powder form or in the sol form, and used singly or in combination of two or more species.

No particular limitation is imposed on the silicon source employed in the basic aqueous solution, so long as the silicon source is soluble in an aqueous alkaline solution and forms silica through firing. Examples of the silicon source include orthosilicic acid, metasilisic acid, sodium salts and potassium salts thereof, and water glass. These species may be used singly or in combination of two or more species. Among them, water glass, which is a hydrate of sodium silicate, is particularly preferred.
The inorganic base is preferably an alkali metal carbonate, hydroxide, etc., and examples include sodium carbonate, potassium carbonate, sodium hydroxide, and potassium hydroxide. These bases may be used singly or in combination of two or more species. Among them, sodium carbonate and a combination of sodium carbonate and sodium hydroxide are particularly preferred. In a preferred manner, the amount of inorganic base used in the basic solution is adjusted such that, when the acidic aqueous solution or aqueous dispersion is mixed with the basic aqueous solution in the subsequent step, the mixture assumes virtually neutral to basic.
The entirety of the inorganic base may be employed for preparing the basic aqueous solution. Alternatively, a portion of the base may be added to the mixture of the acidic aqueous solution or aqueous dispersion and the basic aqueous solution prepared in the subsequent step.

Each of the thus-prepared the acidic aqueous solution or aqueous dispersion and basic aqueous solution is heated to about 50 to about 90°C, followed by mixing. After completion of mixing, an aqueous solution containing the inorganic base which solution has been heated to 50 to 90°C is further added to the mixture as desired. The liquid mixture is stirred at about 50 to about 90°C for about 0.5 to about 3 hours, to thereby complete the reaction.
Subsequently, the thus-formed solid is sufficiently washed and separated from the liquid, or removed from the liquid and sufficiently washed. The thus-treated solid is dried at about 80 to about 150°C through a known method. The dried product is calcined preferably at 200 to 400°C, to thereby yield a desulfurizing agent B in which nickel and copper are suported on a carrier. When the calcining temperature falls outside the above range, a Ni-Cu-containing desulfurizing agent exhibiting desired performance is difficult to produced.

Next, the method of preparing a silver-on-alumina carrier desulfurizing agent, which is a preferred example of the desulfurizing agent B, will be described.
From the viewpoint of desulfurization performance, the amount of silver supported on the carrier is preferably 5 to 30 mass%. In a specific procedure, firstly, an aqueous solution containing a silver source is prepared. Examples of the silver source include silver nitrate, silver acetate, and silver sulfate. These silver sources may be used singly or in combination of two or more species. Examples of alumina species include γ-, φ-, χ-, δ-, and η-alumina. Of these, γ-, χ-, and η-alumina are preferably employed. Alumina is impregnated with the aqueous solution containing the silver source for causing silver to be supported on alumina, and the product is dried at about 80 to about 150°C, followed by calcing at about 200 to about 400°C, to thereby yield a desulfurizing agent B in which silver is supported on the alumina carrier.

The desulfurizing agent may be used singly or in combination with another desulfurizing agent which has an adsorption property specific to each sulfur compound. In order to fully attain the performance of the desulfurizing agent employed, a liquefied petroleum gas or the like having as low a sulfur content as possible is preferably employed.
In the present invention, when the desulfurizing agent is employed, desulfurization is generally performed at -20 to 100°C, and a gas hourly space velocity (GHSV) of 100 to 10,000 h⁻¹, preferably 100 to 2,000 h⁻¹, more preferably 100 to 1,000 h⁻¹.

According to the method for producing hydrogen of the present invention for use in a fuel cell system, a desulfurized liquefied petroleum gas fuel is subjected to partial-oxidation reforming, auto-thermal reforming, steam reforming, or carbon dioxide reforming in the presence of a partial-oxidation reforming catalyst, an auto-thermal reforming catalyst, a steam reforming catalyst, or a carbon dioxide reforming catalyst, to thereby produce hydrogen.
In the above reforming, the desulfurized liquefied petroleum gas fuel preferably has a sulfur compound content of 0.05 ppm by mass or less, particularly preferably 0.02 ppm by mass or less, from the viewpoint of the service life of each reforming catalyst.
The aforementioned partial-oxidation reforming is a process in which a hydrocarbon compound contained in a liquefied petroleum gas fuel is subjected to partial-oxidation to thereby produce hydrogen. The reforming reaction is performed in the presence of a partial-oxidation reforming catalyst generally at a reaction pressure of ambient pressure to 5 MPa·G, a reaction temperature of 400 to 1,100°C, a GHSV of 1,000 to 100,000 h⁻¹, and an oxygen (O₂)/carbon mole ratio of 0.2 to 0.8.
Auto-thermal reforming is a combined process of partial-oxidation reforming and steam reforming. The reforming reaction is performed in the presence of an auto-thermal reforming catalyst generally at a reaction pressure of ambient pressure to 5 MPa·G, a reaction temperature of 400 to 1,100°C, an oxygen (O₂)/carbon mole ratio of 0.1 to 1, a steam/carbon mole ratio of 0.1 to 10, and a GHSV of 1,000 to 100,000 h⁻¹.

Steam reforming is a process in which a hydrocarbon compound is brought into contact with steam to thereby produce hydrogen. The reforming reaction is performed in the presence of a steam reforming catalyst generally at a reaction pressure of ambient pressure to 3 MPa·G, a reaction temperature of 200 to 900°C, a steam/carbon mole ratio of 1.5 to 10, and a GHSV of 1,000 to 100,000 h⁻¹.
Carbon dioxide reforming is a process in which a hydrocarbon compound is reacted with carbon dioxide to thereby produce hydrogen. In the reforming, hydrogen is produced at a reaction temperature of 200 to 1,300°C, preferably 400 to 1,200°C, more preferably 500 to 900°C. The carbon dioxide/carbon mole ratio is generally 0.1 to 5, preferably 0.1 to 3. When steam is fed to the reforming system, the steam/carbon mole ratio is generally 0.1 to 10, preferably 0.4 to 4. When oxygen is fed to the reforming system, the oxygen/carbon mole ratio is generally 0.1 to 1, preferably 0.2 to 0.8. The reaction pressure is generally 0 to 10 MPa·G, preferably 0 to 5 MPa·G, more preferably 0 to 3 MPa·G. The same GHSV conditions as employed in the steam reforming are employed in the carbon dioxide reforming.

The aforementioned partial-oxidation reforming catalyst, auto-thermal reforming catalyst, steam reforming catalyst, and carbon dioxide reforming catalyst may be appropriately selected from known catalysts, and the selected catalysts may be employed in the reforming processes. Among known catalysts, ruthenium-containing catalysts and nickel-containing catalysts are preferred. Examples of preferred carriers for the catalysts include carriers each containing at least one species selected from among manganese oxide, cerium oxide, and zirconium oxide. These catalyst carriers may be formed solely of a metal oxide, or may be a carrier formed of a refractory porous inorganic oxide such as alumina containing the metal oxide.

The aforementioned reforming reactions may be performed in a continuous-flow method or in a batch method. Of these, a continuous-flow method is preferred.

No particular limitation is imposed on the reaction method, and any of an immobilized bed method, mobilized bed method, and fluidized bed method may be employed. Of these, an immobilized bed method is preferred. No particular limitation is imposed on the type of reactor, and a reactor such as a tube-type reactor may be employed.
Under the aforementioned conditions and in the presence of the reforming catalyst, steam reforming, auto-thermal reforming, partial-oxidation reforming, or carbon dioxide reforming of a hydrocarbon compound is performed, to thereby produce hydrogen. Thus, the reforming processes are suitably employed as a production process of hydrogen for use in fuel cells.

The fuel cell system of the present invention employing a liquefied petroleum gas for LP gas fuel cells is characterized by including a desulfurizer employing a desulfurizing agent, a reformer including a reforming catalyst, a CO conversion catalyst, etc., and a fuel cell employing, as a fuel, hydrogen produced through the reformer. The fuel cell system will be described with reference to Fig. 1.
A fuel stored in a compressed-gas cylinder for liquefied petroleum gas 21 is vaporized and supplied to a desulfurizer 23 via a fuel feed line 22. The desulfurizer 23 is charged with a catalyst such as the aforementioned desulfurizing agent A and/or desulfurizing agent B. The fuel gas which has been desulfurized by means of the desulfurizer 23 is mingled with water fed from a water tank through a water pump 24, and the fuel mixture is fed into a reformer 31 together with air fed by means of an air blower 35. The reformer 31 contains a reforming catalyst, and through any of the aforementioned reforming reactions, hydrogen is produced from a fuel mixture (gas mixture containing a hydrocarbon compound, steam, and oxygen) which has been fed to the reformer 31. Notably, the numeral 38 denotes a flow control valve for fuel gas.

The thus-produced hydrogen is transferred to a CO converter 32 and a CO-selective oxidation apparatus 33 for reducing the CO concentration so as not to affect the characteristics of the produced fuel cell. Examples of the catalyst employed in the CO converter 32 include iron-chromium-containing catalysts, copper-zinc-containing catalysts, and noble metal-containing catalysts. Examples of the catalyst employed in the CO-selective oxidation apparatus 33 include ruthenium-containing catalysts, platinum-containing catalysts, and mixtures thereof. In the case where hydrogen produced through reforming reaction has a low CO content, no CO converter 32 or CO-selective oxidation apparatus 33 may be provided.

A fuel cell 34 is a polymer electrolyte fuel cell including a negative electrode 34A, a positive electrode 34B, and a polymer electrolyte 34C provided therebetween. The hydrogen-rich gas produced through the above process is fed to the negative electrode, while air is fed to the positive electrode through the air blower 35. If required, these gases undergo appropriate humidification (by means of a humidifier not illustrated) before introduction to the electrodes.
In the negative electrode, hydrogen dissociates to proton and electron, while in the positive electrode reaction of oxygen with electron and proton to form water occurs, whereby direct current is provided between the electrodes 34A and 34B. The negative electrode is formed from platinum black, a Pt-on-activated carbon catalyst, a Pt-Ru alloy-on-activated carbon catalyst, etc. The positive electrode is formed from platinum black, a Pt-on-activated carbon catalyst, etc.

When a burner 31A of the reformer 31 is connected with the negative electrode 34A, excess hydrogen may be used as a fuel. In a liquid/gas separator 36 connected with the positive electrode 34B, a discharge gas is separated from water which has been formed from oxygen and hydrogen contained in air fed to the positive electrode 34B. The separated water may be used for forming steam. Notably, since the fuel cell 34 generates heat during electric power generation, the heat is recovered through provision of an exhausted heat recovering apparatus 37 so as to effectively use the recovered heat. The exhausted heat recovering apparatus 37 includes a heat-exchanger 37A, attached to the fuel cell 34, for absorbing heat generated during reaction; a heat-exchanger 37B for transferring the heat absorbed in the heat exchanger 37A to water; a cooler 37C, and a pump 37D for circulating a cooling medium to the heat-exchangers 37A and 37B and the cooler 37C. Hot water obtained in the heat exchanger 37B may be effectively used in other facilities.

### Examples

The present invention will next be described in more detail by way of examples, which should not be construed as limiting the invention thereto.

### (1) Preparation of desulfurizing agent A

β-Zeolite (HSZ-930NHA, product of Tosoh Corporation) was calcined at 500°C. The calcined product (2,000 g) was added to an aqueous solution of silver nitrate (special grade, product of Wako Pure Chemical Industries, Ltd.) (350 g/10 L water), and the mixture stirred for four hours for ionexchange. Subsequently, the remaining solid was washed with water, and collected through filtration. The solid was dried at 120°c for 12 hours by means of a blower and calcined at 400°C for three hours, to thereby yield a desulfurizing agent A containing 6 mass% Ag.

### (2) Preparation of desulfurizing agent B

Nickel sulfate hexahydrate (special grade, Wako Pure Chemical Industries, Ltd.) (7,300 g) and copper sulfate pentahydrate (special grade, Wako Pure Chemical Industries, Ltd.) (1,513 g) were dissolved in water (80 L) heated at 80°C. To the solution, pseudo-boehmite (C-AP (67 mass% as Al₂O₃), product of Catalysts and Chemicals Industries Co., Ltd.) (160 g) and 0.5-mol/L aqueous sulfuric acid (3 L) were sequentially added to thereby adjust the pH to 2 (liquid preparation A). Separately, sodium carbonate (6,000 g) was dissolved in water (80 L) heated at 80°C, and water glass (J-1, Si concentration of 29 mass%, product of Nippon Chemical Industrial Co., Ltd.) (1,802 g) was added to the sodium carbonate solution (liquid preparation B). While each of the liquid preparations A and B were maintained at 80°C, the two preparations were mixed under stirring for one hour. Subsequently, the precipitated cake was washed with water (600 L) and collected through filtration. The collected solid was dried at 120°c for 12 hours by means of a blow-drier and calcined at 350°C for three hours, to thereby yield a desulfurizing agent B containing 50 mass% Ni and 13 mass% Cu.

### (3) Reforming catalyst

A commercial product of a ruthenium-containing reforming catalyst was employed.

### (4) Properties of the tested liquefied petroleum gas fuels 1 to 9 are shown in Tables 1 to 3.

### Example 1

Liquefied petroleum gas fuel 1 having properties shown in Table 1 hereinbelow was supplied through spontaneous vaporization to a 1-kW polymer electrolyte fuel cell (PEFC) system employing LP gas. The system includes a desulfurizer, a reformer, a fuel cell stack, an inverter, etc. The desulfurizer is formed of a stainless steel container (diameter: 4 cm) in which desulfurizing agent A (300 mL) and desulfurizing agent B (150 mL) are charged. In the reformer, a commercial reforming catalyst (600 mL), a commercial shift catalyst (1 L), and a commercial selective oxidation catalyst (0.25 L) are charged. The liquefied petroleum gas fuel 1 was supplied to a fuel cell system, while the flow rate of liquefied petroleum gas fuel 1 was adjusted to 1.8 L/min by means of a thermal mass-flow controller (product of Ohkura Riken Inc.). Desulfurization was performed at ambient temperature and pressure. The reformer was operated at a reformer outlet temperature and pressure of 700°C and 0.03 MPa·G. The amount of water supplied was regulated such that the steam/carbon mole ratio at the start of supply of liquefied petroleum gas fuel 1 was adjusted to 1/3. When the amount of used liquefied petroleum gas fuel 1 reached 0.5 mass% and 98 mass%, the cell output voltage was determined at a current of 33.3 A. The attained voltages were 39.0 V and 38.6 V, respectively.

### Example 2

The procedure of Example 1 was repeated, except that liquefied petroleum gas fuel 2 shown in Table 1 was employed. When the amount of used liquefied petroleum gas fuel 2 reached 0.5 mass% and 98 mass%, the cell output voltage was determined at a current of 33.3 A. The attained voltages were 39.0 V and 38.3 V, respectively.

### Comparative Example 1

The procedure of Example 1 was repeated, except that liquefied petroleum gas fuel 3 shown in Table 2 was employed. When the amount of used liquefied petroleum gas fuel 3 reached 0.5 mass% and 98 mass%, the cell output voltage was determined at a current of 33.3 A. The attained voltages were 38.7 V and 37.0 V, respectively.

### Example 3

Desulfurizing agent A (2 mL) was charged in an upstream portion of a desulfurizer (stainless steel, inner diameter: 10 mm), and desulfurizing agent B (2 mL) was charged in a downstream portion of the desulfurizer. Liquefied petroleum gas fuel 1 shown in Table 1 was supplied at 20 L/h to the desulfurizer maintained at 20°C. An automatic sampling port was provided at the outlet of the desulfurizer, and the total sulfur content was determined through gas chromatography by means of a sulfur chemiluminescence detector (SCD). The determination was performed under the following conditions: separation column: DB-1; path: 60 m; membrane thickness: 5 µm; ID: 0.32 mm; split ratio: 1:5; carrier gas: helium; flow rate: 23 mL/min; and temperature profile: 40°C for 4 min, to 200°C at 10°C/min, and 200°C for 15 min. As a result, after 160 hours from the start of the operation, the total sulfur content at the outlet of the desulfurizer reached 0.05 ppm by mass.

### Example 4

The procedure of Example 3 was repeated, except that liquefied petroleum gas fuel 2 shown in Table 1 was supplied to the desulfurizer. As a result, after 172 hours from the start of the operation, the total sulfur content at the outlet of the desulfurizer reached 0.05 ppm by mass.

### Comparative Example 2

The procedure of Example 3 was repeated, except that liquefied petroleum gas fuel 4 shown in Table 2 was supplied to the desulfurizer. As a result, after 136 hours from the start of the operation, the total sulfur content at the outlet of the desulfurizer reached 0.05 ppm by mass.

### Comparative Example 3

The procedure of Example 3 was repeated, except that liquefied petroleum gas fuel 5 shown in Table 2 was supplied to the desulfurizer. As a result, after 132 hours from the start of the operation, the total sulfur content at the outlet of the desulfurizer reached 0.05 ppm by mass.

### Comparative Example 4

The procedure of Example 3 was repeated, except that liquefied petroleum gas fuel 6 shown in Table 2 was supplied to the desulfurizer. As a result, after 128 hours from the start of the operation, the total sulfur content at the outlet of the desulfurizer reached 0.05 ppm by mass.

### Comparative Example 5

The procedure of Example 3 was repeated, except that liquefied petroleum gas fuel 7 shown in Table 3 was supplied to the desulfurizer. As a result, after 120 hours from the start of the operation, the total sulfur content at the outlet of the desulfurizer reached 0.05 ppm by mass.

### Comparative Example 6

The procedure of Example 3 was repeated, except that liquefied petroleum gas fuel 8 shown in Table 3 was supplied to the desulfurizer. As a result, after 86 hours from the start of the operation, the total sulfur content at the outlet of the desulfurizer reached 0.05 ppm by mass.

### Comparative Example 7

The procedure of Example 3 was repeated, except that liquefied petroleum gas fuel 9 shown in Table 3 was supplied to the desulfurizer. As a result, after 142 hours from the start of the operation, the total sulfur content at the outlet of the desulfurizer reached 0.05 ppm by mass.

**[Table 1]**

| | Examples | | | |
|---|---|---|---|---|
| | 1 | 2 | 3 | 4 |
| LPG fuel No. | 1 | 2 | 1 | 2 |
| Ethane (vol.%) | 0.5 | 0.3 | 0.5 | 0.3 |
| Ethylene (vol.%) | <0.1 | <0.1 | <0.1 | <0.1 |
| Propane (vol.%) | 98.3 | 98 | 98.3 | 98 |
| Propylene (vol.%) | <0.1 | <0.1 | <0.1 | <0.1 |
| Butane (vol.%) | 1.2 | 1.6 | 1.2 | 1.6 |
| Butylene (vol.%) | <0.1 | 0.1 | <0.1 | 0.1 |
| Pentane (vol.%) | <0.1 | <0.1 | <0.1 | <0.1 |
| Total sulfur content (ppm by mass) | 6.2 | 6.1 | 6.2 | 6.1 |
| Carbonyl sulfide (S) content (ppm by mass) | 1.5 | 0.9 | 1.5 | 0.9 |
| Methyl mercaptan (S) content (ppm by mass) | 2.2 | 1.6 | 2.2 | 1.6 |
| Mercaptan (methyl mercaptan excluded) (S) content^{*1} (ppm by mass) | 0.6 | 1.0 | 0.6 | 1.0 |
| Sulfide (S) content^{*2} (ppm by mass) | 0.7 | 1.2 | 0.7 | 1.2 |
| DMDS (S) content^{*3} (ppm by mass) | 1.2 | 1.4 | 1.2 | 1.4 |
| Methanol content (ppm by mass) | 15 | 5 | 15 | 5 |
| Water content (ppm by mass) | 23 | 22 | 23 | 22 |
| Voltage (V) at percent consumption of 0.5% | 39.0 | 39.0 | - | - |
| Voltage (V) at percent consumption of 98 % | 38.6 | 38.3 | - | - |
| Breakthrough time (h) | - | - | 160 | 172 |

| | | | | |
|---|---|---|---|---|
| Note 1: The composition of each fuel gas was determined in accordance with "compositional analysis method" stipulated in JIS K 2240 5.9. The compositions of olefin and diolefin were calculated, in accordance with 5.9.8 of the method, to the third decimal place, and rounded to the nearest hundredth. Note 2: DMDS: dimethyl disulfide *1: Total sulfur content of mercaptans having a b.p. lower than that of DMDS *2: Total sulfur content of sulfides having a b.p. lower than that of DMDS *3: Total sulfur content of sulfur compounds having a b.p. not lower than that of DMDS | | | | |

**[Table 2]**

| | Comparative Examples | | | |
|---|---|---|---|---|
| | 1 | 2 | 3 | 4 |
| LPG fuel No. | 3 | 4 | 5 | 6 |
| Ethane (vol.%) | 1 | 0.3 | 0.6 | 0.3 |
| Ethylene (vol.%) | <0.1 | <0.1 | <0.1 | <0.1 |
| Propane (vol.%) | 93.0 | 98.2 | 96.8 | 98 |
| Propylene (vol.%) | <0.1 | 0.3 | <0.1 | <0.1 |
| Butane (vol.%) | 6 | 1 | 2.6 | 1.7 |
| Butylene (vol.%) | <0.1 | 0.2 | <0.1 | <0.1 |
| Pentane (vol.%) | <0.1 | <0.1 | <0.1 | <0.1 |
| Total sulfur content (ppm by mass) | 5.9 | 6.3 | 5.6 | 6.3 |
| Carbonyl sulfide (S) content (ppm by mass) | 1.3 | 1.6 | 2.7 | 0.7 |
| Methyl mercaptan (S) content (ppm by mass) | 2.5 | 2.1 | 0.7 | 3.5 |
| Mercaptan (methyl mercaptan excluded) (S) content^{*1} (ppm by mass) | 0.6 | 0.3 | 0.5 | 0.3 |
| Sulfide (S) content^{*2} (ppm by mass) | 0.7 | 1.0 | 0.8 | 0.5 |
| DMDS (S) content^{*3} (ppm by mass) | 0.8 | 1.3 | 0.9 | 1.3 |
| Methanol content (ppm by mass) | 25 | 21 | 15 | 30 |
| Water content (ppm by mass) | 34 | 25 | 25 | 18 |
| Voltage (V) at percent consumption of 0.5 % | 38.7 | - | - | - |
| Voltage (V) at percent consumption of 98 % | 37.0 | - | - | - |
| Breakthrough time (h) | - | 136 | 132 | 128 |

| | | | | |
|---|---|---|---|---|
| Note 1: The composition of each fuel gas was determined in accordance with "compositional analysis method" stipulated in JIS K 2240 5.9. The compositions of olefin and diolefin were calculated, in accordance with 5.9.8 of the method, to the third decimal place, and rounded to the nearest hundredth. Note 2: DMDS: dimethyl disulfide *1: Total sulfur content of mercaptans having a b.p. lower than that of DMDS *2: Total sulfur content of sulfides having a b.p. lower than that of DMDS *3: Total sulfur content of sulfur compounds having a b.p. not lower than that of DMDS | | | | |

**[Table 3]**

| | Comparative Examples | | |
|---|---|---|---|
| | 5 | 6 | 7 |
| LPG fuel No. | 7 | 8 | 9 |
| Ethane (vol.%) | 0.4 | 0.8 | 0.5 |
| Ethylene (vol.%) | <0.1 | <0.1 | <0.1 |
| Propane (vol.%) | 97.9 | 96 | 98 |
| Propylene (vol.%) | <0.1 | <0.1 | <0.1 |
| Butane (vol.%) | 1.7 | 3.2 | 1.5 |
| Butylene (vol.%) | <0.1 | <0.1 | <0.1 |
| Pentane (vol.%) | <0.1 | <0.1 | <0.1 |
| Total sulfur content (ppm by mass) | 6.4 | 6.7 | 5.8 |
| Carbonyl sulfide (S) content (ppm by mass) | 1.0 | 1.7 | 1.0 |
| Methyl mercaptan (S) content (ppm by mass) | 1.8 | 1.8 | 1.8 |
| Mercaptan (methyl mercaptan excluded) (S) content^{*1} (ppm by mass) | 0.4 | 0.9 | 1.2 |
| Sulfide (S) content^{*2} (ppm by mass) | 0.5 | 0.9 | 0.7 |
| DMDS (S) content^{*3} (ppm by mass) | 2.7 | 1.4 | 1.1 |
| Methanol content (ppm by mass) | 45 | 193 | 45 |
| Water content (ppm by mass) | 25 | 37 | 65 |
| Voltage (V) at percent consumption of 0.5 % | - | - | - |
| Voltage (V) at percent consumption of 98 % | - | - | - |
| Breakthrough time (h) | 120 | 86 | 142 |

| | | | |
|---|---|---|---|
| Note 1: The composition of each fuel gas was determined in accordance with "compositional analysis method" stipulated in JIS K 2240 5.9. The compositions of olefin and diolefin were calculated, in accordance with 5.9.8 of the method, to the third decimal place, and rounded to the nearest hundredth. Note 2: DMDS: dimethyl disulfide *1: Total sulfur content of mercaptans having a b.p. lower than that of DMDS *2: Total sulfur content of sulfides having a b.p. lower than that of DMDS *3: Total sulfur content of sulfur compounds having a b.p. not lower than that of DMDS | | | |

### Industrial Applicability

According to the present invention, there can be provided a liquefied petroleum gas fuel for LP gas fuel cells, which fuel ensures effective performance of a desulfurizing agent employed in a desulfurizer even when used in a minimum amount, thereby enhancing desulfurization performance; which fuel prevents damaging of a reforming catalyst employed in a reformer for producing hydrogen provided on the downstream side of a desulfurizer; and which fuel realizes reliable operation of the reformer and consistent generation of electric power. The invention can also provide a method for desulfurizing the liquefied petroleum gas fuel, a fuel cell system employing a hydrogen-containing gas produced through reforming of the liquefied petroleum gas fuel which has been desulfurized through the desulfurization method.

## Claims

1. A liquefied petroleum gas fuel for LP gas fuel cells for being fed to a fuel cell system through spontaneous vaporization, which fuel has a C2 hydrocarbon compound content of 3 vol.% or less, a C4 hydrocarbon compound content of 3 vol.% or less, a total sulfur content of 10 ppm by mass or less, a carbonyl sulfide content in terms of sulfur content of 2 ppm by mass or less, a methyl mercaptan content in terms of sulfur content of 3 ppm by mass or less, a content of sulfur compounds having a boiling point equal to or higher than that of dimethyl disulfide in terms of sulfur content of 2 ppm by mass or less, a methanol content of 50 ppm by mass or less, and a water content of 50 ppm by mass or less, the balance being a C3 hydrocarbon compounds.

2. The liquefied petroleum gas fuel for LP gas fuel cells as described in claim 1, wherein the C2 hydrocarbon compound content is 1 vol.% or less, and the C4 hydrocarbon compound content is 2 vol.% or less, the balance being C3 hydrocarbon compounds.

3. The liquefied petroleum gas fuel for LP gas fuel cells as described in claim 1, which has a C3 olefin content of 0.1 vol.% or less, and a C4 olefin and/or diolefin content of 0.1 vol.% or less.

4. The liquefied petroleum gas fuel for LP gas fuel cells as described in claim 3, which has a C4 diolefin content of 0.03 vol.% or less.

5. A desulfurization method **characterized by** comprising spontaneously vaporizing a liquefied petroleum gas fuel for LP gas fuel cells as recited in any one claims 1 to 4 and desulfurizing by use of a desulfurizing agent.

6. The desulfurization method as described in claim 5, wherein the desulfurizing agent comprises a zeolite-containing desulfurizing agent and/or at least one species selected from among a metallic element, a metal oxide, and a metallic component-on-oxide.

7. The desulfurization method as described in claim 6, wherein the zeolite-containing desulfurizing agent comprises zeolite and at least one metallic component selected from among an Ag component, a Cu component, an Ni component, a Zn component, an Mn component, an Fe component, a Co component, an alkali metal component, an alkaline earth metal component, and a rare earth metal component.

8. The desulfurization method as described in claim 6, wherein the zeolite has a β (BEA) structure and/or a faujasite (FAU) structure.

9. The desulfurization method as described in claim 6, wherein the desulfurizing agent comprising at least one species selected from among a metallic element, a metal oxide, and a metallic component-on-oxide, contains at least one metallic component selected from among an Ag component, a Cu component, an Ni component, a Zn component, an Mn component, an Fe component, a Co component, an Si component, and an Al component, an alkali metal component, an alkaline earth metal component, and a rare earth metal component.

10. An LP gas fuel cell system **characterized by** employing a hydrogen-containing gas produced from a reforming product of a liquefied petroleum gas fuel which has been desulfurized through a desulfurization method as recited claim 5.

11. The LP gas fuel cell system as described in claim 10, wherein reforming is partial-oxidation reforming, auto-thermal reforming, steam reforming, or carbon dioxide reforming.
